# FASCICULE DE BREVET EUROPEEN

(11) **EP 3 087 329 B1**
(45) Date de publication et mention de la délivrance du brevet: **21.03.2018**
(21) Numéro de dépôt: 14831006.3
(22) Date de dépôt: 22.12.2014
(51) Int. Cl.: F25B 21/00

(54) **GÉNÉRATEUR THERMIQUE MAGNETOCALORIQUE ET SON PROCÉDÉ DE REFROIDISSEMENT**
MAGNETOKALORISCHER WÄRMEGENERATOR UND VERFAHREN ZUR KÜHLUNG DAVON
MAGNETOCALORIC THERMAL GENERATOR AND METHOD OF COOLING SAME

(30) Priorité: 27.12.2013 FR 1363661
(43) Date de publication de la demande: 02.11.2016
(73) Titulaire: Cooltech Applications, 67810 Holtzheim (FR)
(72) Inventeur: MULLER, Christian, F-67000 Strasbourg (FR)
(74) Mandataire: Koelbel, Caroline
(86) Numéro de dépôt international: PCT/FR2014/053518
(87) Numéro de publication internationale: WO 2015/097401

(56) Documents cités:
- FR-A1- 2 983 281
- US-A1- 2008 236 172
- US-A1- 2011 162 388

## Description

### Domaine technique :

La présente invention concerne un générateur thermique magnétocalorique comportant au moins un circuit primaire reliant fluidiquement des éléments magnétocaloriques par un fluide caloporteur appelé fluide primaire circulant selon un mouvement alternatif de va-et-vient, lesdits éléments magnétocaloriques étant soumis au champ magnétique variable d'un système magnétique créant alternativement, dans chaque élément magnétocalorique, une phase magnétique d'échauffement et une phase magnétique de refroidissement, générateur dans lequel le circuit primaire comporte un côté froid et un côté chaud au niveau desquels des éléments magnétocaloriques sont reliés fluidiquement entre eux.

Elle concerne également un procédé de refroidissement d'un fluide dit fluide secondaire par un générateur thermique magnétocalorique.

### Technique antérieure :

La technologie du froid magnétique à température ambiante est connue depuis plus d'une trentaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

Ces générateurs thermiques exploitent l'effet magnétocalorique (EMC) de certains matériaux, qui consiste en une variation de leur température lorsqu'ils sont soumis à un champ magnétique variable. Dans de tels générateurs, les matériaux magnétocaloriques sont soumis à une succession de phases magnétiques d'aimantation et de désaimantation, et un échange thermique avec un fluide caloporteur appelé fluide primaire est réalisé pour collecter ainsi l'énergie thermique produite par lesdits matériaux et parvenir à une variation de température la plus élargie possible au sein de ces matériaux (gradient de température). Pour ce faire, la circulation du fluide primaire est alternée et ce fluide primaire circule dans des canaux ou des pores traversant le matériau magnétocalorique. Un cycle magnétocalorique comprend deux phases, à savoir une phase de magnétisation ou d'aimantation, et une phase de démagnétisation ou de désaimantation, qui se traduisent par une énergie disponible à chaque phase. Ce cycle est répété jusqu'à des fréquences de plusieurs Hertz. Pendant ces phases, le matériau magnétocalorique est parcouru par le fluide primaire qui va, soit se réchauffer au contact du matériau lors d'une phase dite de magnétisation, soit se refroidir au contact du matériau lors d'une phase dite de démagnétisation. L'effet magnétocalorique, correspondant à une variation d'entropie dudit matériau, est maximum lorsque la température du matériau est proche de sa température de Curie.

Or, un générateur thermique magnétocalorique doit pouvoir échanger l'énergie thermique qu'il produit avec au moins une application extérieure. Cet échange est généralement réalisé par un ou des échangeurs de chaleur qui ont pour objectif de restituer ou d'échanger avec une ou plusieurs applications extérieures audit générateur thermique magnétocalorique l'énergie thermique produite par ledit générateur thermique. Ces applications extérieures peuvent être l'air environnant, le générateur thermique, un dispositif ou une enceinte thermique, par exemple.

Dans une configuration classique, les éléments magnétocaloriques d'un générateur thermique magnétocalorique sont reliés entre eux au niveau du côté chaud par l'intermédiaire d'un échangeur de chaleur et de manière symétrique ils sont également reliés entre eux au niveau du côté froid par l'intermédiaire d'un autre échangeur de chaleur. Or, l'expérience a montré qu'une telle configuration présente des limites. Cela est particulièrement le cas lorsque le côté froid du générateur thermique est exploité. Le fait de réaliser un échange thermique avec une application ou un circuit secondaire présentant un écart de température important par rapport à la température du fluide primaire a pour effet de réchauffer considérablement le côté froid du générateur et de dégrader son efficacité thermique. En d'autres termes, le gradient thermique établi dans le générateur thermique est dégradé, de sorte qu'une partie de la puissance produite par l'effet magnétocalorique doit être utilisée pour rétablir ce gradient, et qu'en conséquence cette partie de la puissance ne pourra pas être exploitée ou utilisée par la ou les applications extérieures.

De la même manière, lorsque le côté chaud du générateur thermique magnétocalorique est exploité, il y a un risque de refroidir le côté chaud du générateur et de dégrader son efficacité thermique. FR 2 983 281 A1 divulgue un générateur thermique magnétocalorique selon le préambule de la revendication 1 et un procédé de refroidissement par un générateur thermique magnétocalorique selon le préambule de la revendication 14. Pour exploiter de manière optimale la puissance d'un générateur thermique, il est donc nécessaire d'optimiser les caractéristiques d'échanges thermiques entre le circuit primaire et le circuit secondaire.

### Exposé de l'invention :

La présente invention vise à pallier ces inconvénients en proposant une solution aux problèmes évoqués ci-dessus. A cet effet, le générateur thermique magnétocalorique selon l'invention est réalisé de telle sorte que le transfert d'énergie thermique entre le générateur thermique et la ou les applications extérieures destinées à être réfrigérées, refroidies ou réchauffées est optimisé pour avoir un impact le plus faible possible sur le gradient thermique établi dans le générateur thermique magnétocalorique et sur sa puissance thermique. L'invention a également pour objet un générateur thermique magnétocalorique particulièrement adapté pour le refroidissement en continu d'un fluide circulant dans un circuit secondaire.

A cet effet, la présente invention propose un générateur thermique magnétocalorique du genre indiqué en préambule, caractérisé en ce qu'au moins un desdits côtés chaud et froid du circuit primaire comporte au moins un point de sortie relié à un autre point du circuit primaire, appelé point d'injection par l'intermédiaire d'au moins une conduite de dérivation autorisant le déplacement de fluide primaire dans un seul sens, uniquement du point de sortie vers le point d'injection.

Dans un mode de réalisation préféré, les éléments magnétocaloriques peuvent être répartis dans au moins deux étages, et les éléments magnétocaloriques d'un desdits étages peuvent être reliés fluidiquement entre eux au niveau du côté froid et les éléments magnétocaloriques d'un autre desdits étages peuvent être reliés fluidiquement entre eux au niveau du côté chaud.

Dans une première variante, les éléments magnétocaloriques de deux étages reliés peuvent être constamment dans une phase magnétique inverse. Dans une autre variante, les éléments magnétocaloriques de deux étages reliés peuvent être constamment dans une phase magnétique identique.

Selon l'invention, la conduite de dérivation peut être reliée thermiquement à un circuit secondaire par au moins une zone d'échange thermique.

En outre, ladite zone d'échange thermique peut être conçue pour réaliser un déplacement à contre-courant, co-courant ou courant croisé entre le fluide primaire et un fluide secondaire dudit circuit secondaire.

La conduite de dérivation peut avantageusement comporter un dispositif de réglage du débit de fluide primaire y circulant.

Dans un mode de réalisation, ledit au moins un point de sortie est situé dans le côté froid du circuit primaire. Dans ce mode, le point d'injection peut être situé dans le côté chaud du circuit primaire.

Dans un second mode de réalisation, ledit au moins un point de sortie est situé dans le côté chaud du circuit primaire. Dans ce mode, le point d'injection peut être situé dans le côté froid du circuit primaire.

Dans les deux modes de réalisation, le point d'injection peut, en variante, être situé entre deux étages d'éléments magnétocaloriques.

Dans encore une autre variante, le point d'injection peut être situé entre des éléments magnétocaloriques consécutifs de chaque étage.

Egalement, la présente invention propose un procédé de refroidissement d'un fluide dit fluide secondaire par un générateur thermique magnétocalorique du genre indiqué en préambule, caractérisé en ce qu'il consiste à relier thermiquement le circuit secondaire dans lequel circule le fluide secondaire par au moins une zone d'échange thermique à une conduite de dérivation dudit générateur thermique magnétocalorique et à faire circuler en continu ledit fluide secondaire dans ledit circuit secondaire.

Un tel procédé est particulièrement adapté pour réaliser le refroidissement d'un fluide secondaire qui est en permanence renouvelé. Ainsi, ce procédé est avantageux pour le refroidissement d'un fluide secondaire qui est dans un circuit secondaire qui ne reboucle pas sur lui-même, et dans lequel le flux hydraulique et le flux thermique du fluide secondaire sont continus.

### Description sommaire des dessins :

La présente invention et ses avantages apparaîtront mieux dans la description suivante des modes de réalisation donnés à titre d'exemples non limitatifs, en référence aux dessins annexés, dans lesquels:
- les figures 1A et 1B sont des vues schématiques de deux étages d'un générateur thermique selon une première variante de réalisation, dans des phases magnétiques opposées,
- les figures 2A à 2B sont des vues schématiques de deux étages d'un générateur thermique selon une deuxième variante de réalisation, dans des phases magnétiques opposées,
- les figures 3A et 3B sont des vues schématiques de deux étages d'un générateur thermique selon une troisième variante de réalisation, dans des phases magnétiques opposées,
- les figures 4A et 4B sont des vues schématiques de deux étages d'un générateur thermique selon une quatrième variante de réalisation, dans des phases magnétiques opposées,
- les figures 5A et 5B sont des vues schématiques de deux étages d'un générateur thermique selon une cinquième variante de réalisation, dans des phases magnétiques opposées,
- les figures 6A et 6B sont des vues schématiques de deux étages d'un générateur thermique selon une sixième variante de réalisation, dans des phases magnétiques opposées,
- les figures 7A et 7B sont des vues schématiques de deux étages d'un générateur thermique selon une septième variante de réalisation, dans des phases magnétiques opposées,
- les figures 8A et 8B sont des vues schématiques de deux étages d'un générateur thermique selon une huitième variante de réalisation, dans des phases magnétiques opposées,
- la figure 9 est une vue en perspective simplifiée du générateur thermique comportant les deux étages représentés schématiquement dans les figures 7A et 7B,
- les figures 10A et 10B sont des vues schématiques de deux étages d'un générateur thermique selon une neuvième variante de réalisation, dans des phases magnétiques opposées,
- les figures 11A et 11B sont des vues schématiques de deux étages d'un générateur thermique selon une dixième variante de réalisation, dans des phases magnétiques opposées, et
- les figures 12A et 12B sont des vues schématiques de deux étages d'un générateur thermique selon une onzième variante de réalisation, dans des phases magnétiques opposées.

### Illustrations de l'invention :

Dans les exemples de réalisation illustrés, les éléments ou parties identiques portent les mêmes références numériques.

L'invention concerne un générateur thermique magnétocalorique 10, 20, 30, 40, 50, 60, 70, 80, 90, 100, 110 comportant des éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄. Dans les variantes de réalisation illustrées, ces éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄ sont répartis en au moins deux étages thermiques. Un fluide caloporteur appelé fluide primaire est déplacé selon un mouvement alterné dans au moins un circuit primaire traversant lesdits éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄. Ce fluide primaire a pour fonction, d'une part, d'établir et de maintenir un gradient thermique dans les éléments magnétocaloriques desdits étages thermiques entre deux extrémités du générateur thermique 10, 20, 30, 40, 50, 60, 70, 80, à savoir un côté froid F et un côté chaud C et, d'autre part, de permettre d'échanger ou de restituer l'énergie thermique produite dans ledit générateur avec au moins une application extérieure, c'est-à-dire ne faisant pas partie du générateur thermique 10, 20, 30, 40, 50, 60, 70, 80, 90, 100, 110. Cet échange ou cette restitution se fait par l'intermédiaire d'une zone d'échange qui peut être matérialisée par un échangeur thermique. Cette zone d'échange permet de réaliser un échange thermique entre le fluide primaire et un fluide secondaire d'un circuit secondaire qui appartient à l'application extérieure.

Bien que cela ne soit par illustré, l'invention prévoit également d'avoir un seul étage d'éléments magnétocaloriques.

De préférence, le fluide primaire et le fluide secondaire sont des liquides. Le fluide secondaire est de préférence déplacé de manière continue par une pompe ou tout autre dispositif analogue pour refroidir, réchauffer ou tempérer une application extérieure. Le fluide primaire destiné à être en contact avec les éléments magnétocaloriques peut être constitué par de l'eau, de l'eau additionnée d'un antigel tel que le glycol, par exemple, un gaz liquéfié pressurisé ou non, ou encore une saumure.

Chaque élément magnétocalorique M₁₁, M₁₂, M₂₁, M₂₂, M₁₁₁, M₁₁₂, M₁₁₃, M₁₁₄, M₂₂₁, M₂₂₂, M₂₂₃, M₂₂₄ peut être constitué par un ou plusieurs matériaux magnétocaloriques aptes à être traversés par le fluide primaire. Par élément magnétocalorique, il faut comprendre au sens de la présente invention un élément physique comportant du matériau magnétocalorique. Un élément magnétocalorique peut notamment comporter plusieurs types de matériaux magnétocaloriques. A cet effet, lesdits éléments magnétocaloriques peuvent être poreux de sorte que leurs pores forment des passages de fluide débouchants. Ils peuvent également se présenter sous la forme d'un ou de plusieurs blocs pleins dans lesquels des mini ou micro-canaux sont usinés, moulés ou injectés. Ils peuvent aussi être constitués par un assemblage de plaques, éventuellement rainurées, superposées et entre lesquelles le fluide caloporteur peut s'écouler. Ils peuvent enfin se présenter sous la forme de poudre ou de particules de sorte que les interstices forment des passages de fluide. Toute autre forme de réalisation permettant au fluide primaire d'échanger thermiquement avec le matériau constituant un élément magnétocalorique M₁₁, M₁₂, M₂₁, M₂₂, M₁₁₁, M₁₁₂, M₁₁₃, M₁₁₄, M₂₂₁, M₂₂₂, M₂₂₃, M₂₂₄ peut, bien entendu, convenir. De préférence, les matériaux magnétocaloriques constituant les éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄ présentent des températures de Curie différentes, allant de la plus faible vers la plus importante du côté froid F vers le côté chaud C.

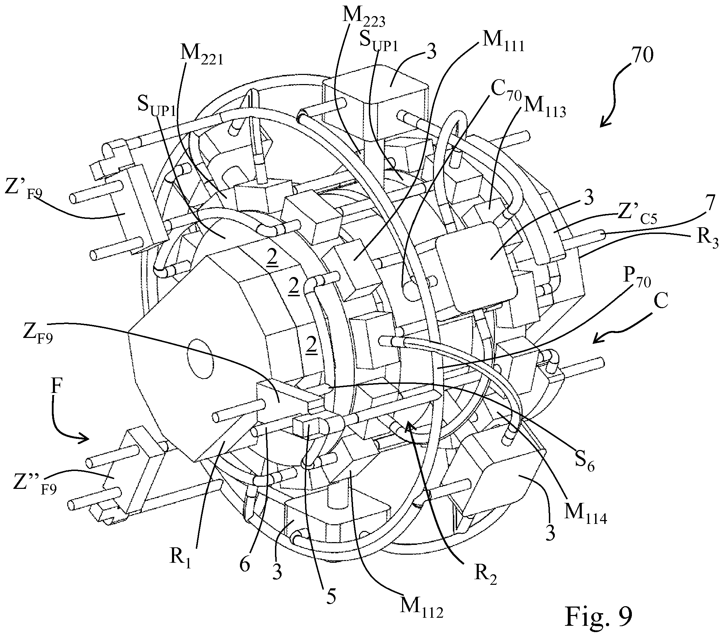

Dans les variantes de réalisation représentées, le système magnétique, soumettant les éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄ à une variation de champ magnétique, comporte des aimants permanents 2 ou similaires (figure 9), et est déplacé par rapport auxdits éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄ pour créer alternativement dans lesdits éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄, une phase d'échauffement lorsqu'un champ magnétique y est appliqué ou augmenté, puis une phase de refroidissement, lorsque le champ magnétique est retiré ou diminué. Ce système magnétique peut également se présenter sous la forme d'un électroaimant alimenté séquentiellement ou par tout autre moyen analogue susceptible de créer une variation de champ magnétique. Les inversions de sens de circulation du fluide primaire dans le circuit primaire sont synchronisées avec les phases de magnétisation et démagnétisation des éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄, de manière à établir un gradient de température le plus élevé possible au sein des éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃, M₂₂₄. A cet effet, le fluide primaire traversant un élément magnétocalorique en phase d'échauffement - c'est-à-dire magnétisé - est déplacé en direction du côté chaud C, puis est déplacé vers le côté froid F lorsqu'il traverse un élément magnétocalorique en phase de refroidissement - c'est-à-dire démagnétisé. Le sens de circulation du fluide primaire est représenté par des flèches dans les figures annexées.

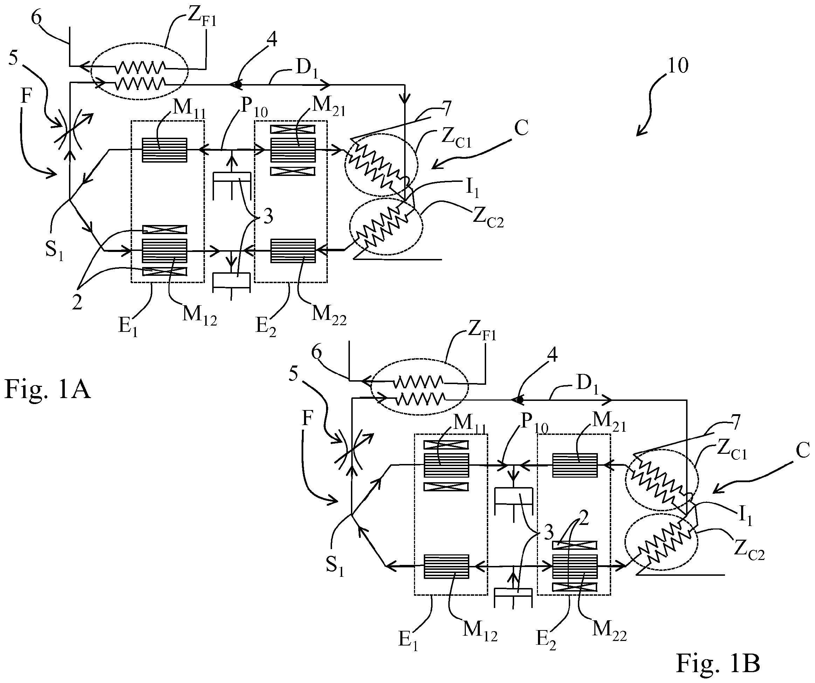

La figure 1 représente ainsi un circuit primaire P₁₀ reliant deux étages E₁, E₂ d'un générateur thermique magnétocalorique 10 selon une première variante de réalisation de l'invention. Le circuit primaire relie les deux étages E₁, E₂ et comporte deux actionneurs 3 déplaçant le fluide primaire selon un mouvement alterné de va-et-vient. Le circuit primaire P₁₀ comporte ainsi deux branches parallèles de circuit de fluide primaire traversant lesdits éléments magnétocaloriques et reliées entre elles au niveau des côtés chaud C et froid F. Le système magnétique est illustré par des aimants permanents 2. Les deux étages E₁ et E₂ sont reliés par l'intermédiaire des actionneurs 3 qui sont par exemple des pistons déplacés par un profil d'une came de commande mobile. De tels pistons peuvent être rigides ou déformables telle une membrane, par exemple. Bien entendu, tout autre moyen apte à déplacer le fluide primaire peut être utilisé. En outre, le déplacement d'un piston ou similaire peut être commandé par un dispositif de manoeuvre pouvant être une came de commande, un dispositif magnétique, un moteur linéaire ou tout autre moyen équivalent apte à déplacer ledit actionneur selon un mouvement de va-et-vient.

En outre, les éléments magnétocaloriques M₁₁, M₁₂ de l'étage E₁ sont reliés au niveau du côté froid F du circuit primaire P₁₀ et les éléments magnétocaloriques M₂₁, M₂₂ de l'étage E₂ sont reliés au niveau du côté chaud C du circuit primaire P₁₀. Selon l'invention, le côté froid F du circuit primaire P₁₀ comporte un point de sortie S₁ relié fluidiquement à un point d'injection I₁ par l'intermédiaire d'une conduite de dérivation D₁ dans le côté chaud C dudit circuit primaire P₁₀. Cette conduite de dérivation D₁ comporte un dispositif n'autorisant le passage du fluide que du point de sortie S₁ vers le point d'injection I₁. Un tel dispositif contrôlant le sens de circulation du fluide primaire peut être un clapet anti-retour 4, par exemple. Cette conduite de dérivation D₁ traverse une zone d'échange froide Z_{F1} dans laquelle le fluide primaire réalise un échange thermique avec un fluide secondaire d'un circuit secondaire 6.

Ainsi, le fait de forcer le sens de circulation du fluide dans la conduite de dérivation D₁ permet de s'assurer que seul le fluide sortant du côté froid F d'un élément magnétocalorique dans une phase de démagnétisation peut être dirigé vers cette conduite de dérivation D₁. Il en résulte que la capacité de refroidissement du circuit secondaire est optimisée.

Le fluide primaire issu de la conduite de dérivation D₁ s'est réchauffé après avoir traversé la zone d'échange froide Z_{F1}. Toutefois, il est réinjecté dans le côté chaud C du circuit primaire P₁₀, de sorte que ce réchauffement a un impact limité sur la température du côté froid F du circuit primaire P₁₀, ce qui est particulièrement avantageux dans le cadre de la réfrigération. En outre, cela permet de réaliser un échange important dans la zone d'échange froide Z_{F1}.

Cette variante de réalisation est également transposable dans un mode de réalisation avec un seul étage, dans lequel la conduite de dérivation peut relier un point de sortie du côté froid à un point d'injection du côté chaud du circuit primaire.

Le circuit primaire P₁₀ comporte deux zones d'échange chaudes Z_{C1}, Z_{C2} consécutives au niveau de son côté chaud C, et le point d'injection I₁ est situé entre ces deux zones d'échange Z_{C1}, Z_{C2}. Cela est très avantageux car cela permet d'injecter le fluide primaire issu de la conduite de dérivation D₁ dans la portion du circuit primaire P₁₀ traversant un élément magnétocalorique en phase de refroidissement. Ainsi, le fluide primaire est réinjecté vers l'élément magnétocalorique M₂₂ qui se refroidit dans la phase illustrée à la figure 1A et est réinjecté dans l'élément magnétocalorique M₂₁ qui se refroidit dans la phase magnétique suivante ou opposée illustrée dans la figure 1B. Cela permet également de favoriser le mélange des fluides au point d'injection I₁.

Les zones d'échange chaudes Z_{C1}, Z_{C2} permettent soit d'évacuer la chaleur produite par le générateur thermique 10, soit de réchauffer une autre application extérieure, par exemple, au moyen d'un échange thermique avec un second circuit de fluide secondaire 7.

Selon l'invention, la conduite de dérivation D₁ comporte un dispositif de réglage 5 du débit de fluide primaire y circulant. Ce dispositif de réglage 5 permet de déterminer la capacité d'échange thermique entre le circuit primaire P₁₀ et le circuit secondaire 6 dans la zone d'échange froide Z_{F1} et d'ajuster les pertes de charge entre le circuit primaire P₁₀ et la conduite de dérivation D₁. Cette caractéristique est transposable dans toutes les variantes de réalisation représentées.

En outre, dans l'ensemble des exemples illustrés, les points de sortie sont situés dans le côté froid F du circuit primaire et illustrent de ce fait des configurations de générateurs thermiques magnétocaloriques optimisés pour une exploitation optimale de leur puissance froide. L'invention prévoit également de positionner ces points de sortie dans le côté chaud et de réaliser un échange classique dans le coté froid F. Une telle disposition permet d'exploiter la chaleur produite par le générateur thermique tout en limitant l'impact dû à cet échange thermique sur la température du côté chaud C du circuit primaire, ce qui est particulièrement avantageux dans le cadre du chauffage. Cela permet ainsi de réaliser un échange important dans la zone d'échange reliée à la conduite de dérivation dont le point de sortie est situé dans le côté chaud du circuit primaire. En d'autres termes, l'ensemble des exemples illustrés peut être transposé en intervertissant le côté chaud C et le côté froid F de manière à obtenir une plus grande capacité à réchauffer ou à augmenter la température d'un fluide secondaire d'une application extérieure.

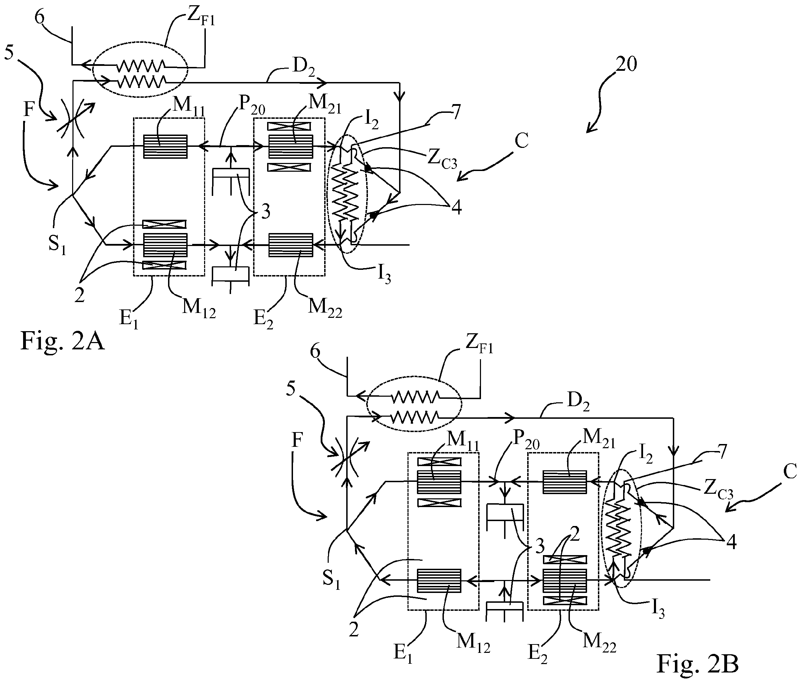

Les figures 2A et 2B représentent une variante de réalisation d'un circuit primaire P₂₀ d'un générateur thermique magnétocalorique 20 se distinguant de celui représenté dans les figures 1A et 1B par son côté chaud C. Dans cette variante, le côté chaud C du circuit primaire P₂₀ comporte une seule zone d'échange thermique chaude Z_{C3} dont l'entrée et la sortie constituent respectivement un point d'injection I₂, I₃. La conduite de dérivation D₂ se scinde en deux portions de conduite et ces portions de conduite comportent chacune un clapet anti-retour. De cette manière, il est également assuré que le fluide primaire issu de la conduite de dérivation D₂ est toujours réinjecté vers l'élément magnétocalorique M₂₁, M₂₂ subissant un refroidissement. Une telle configuration avec une seule zone d'échange chaude Z_{C3} par rapport à deux zones d'échanges chaudes Z_{C1} et Z_{C2} dans le générateur thermique 10 décrit précédemment, permet de simplifier la construction du générateur thermique 20 et d'en réduire de ce fait les coûts de revient.

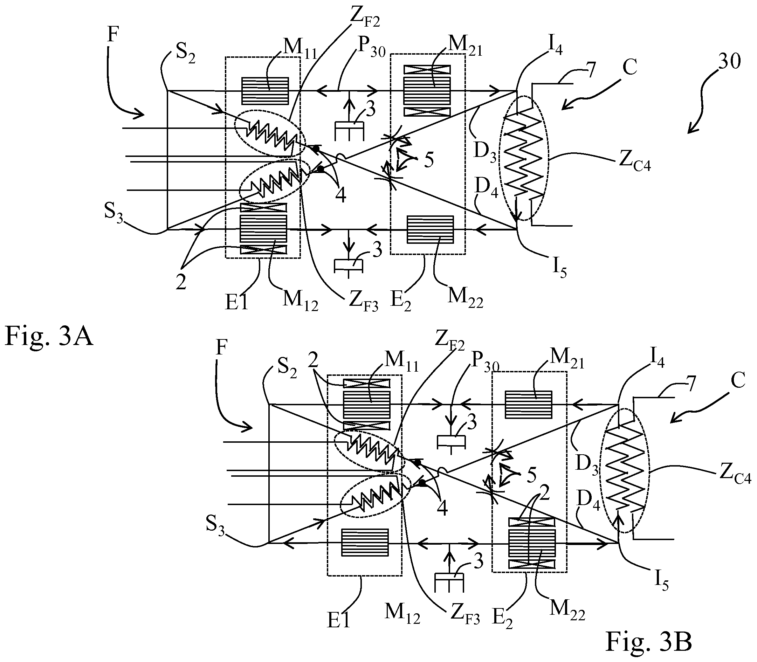

Les figures 3A et 3B représentent une autre variante de réalisation d'un générateur thermique magnétocalorique 30. Dans cette variante, le générateur comporte deux conduites de dérivation D₃, D₄. La conduite de dérivation D₄ relie un point de sortie S₂ du côté froid F directement relié à un élément magnétocalorique M₁₁ de l'étage E₁ côté froid F à un point d'injection I₅ du côté chaud C directement relié à un élément magnétocalorique M₂₂ de l'étage E₂ côté chaud C qui est constamment dans le même état de magnétisation que l'autre élément magnétocalorique M₁₁, à savoir en phase de refroidissement dans la figure 3A. De la même manière, la conduite de dérivation D₃ relie un point de sortie S₃ du côté froid F directement relié à un élément magnétocalorique M₁₂ de l'étage E₁ côté froid F à un point d'injection I₄ du côté chaud C directement relié à un élément magnétocalorique M₂₁ de l'étage E₂ côté chaud C qui est constamment dans le même état de magnétisation que l'autre élément magnétocalorique M₁₂, à savoir en phase d'échauffement dans la figure 3A. Dans une telle configuration et dans l'état de magnétisation illustré à la figure 3A, le fluide primaire est refroidi en traversant l'élément magnétocalorique M₁₁ et emprunte la conduite de dérivation D₄ traversant la zone d'échange froide Z_{F2} pour être réinjecté par l'intermédiaire du point d'injection I₅ dans l'élément magnétocalorique M₂₂ de l'étage E₂ côté chaud C. Le fait de réinjecter, de manière unidirectionnelle, dans le côté chaud C, du fluide primaire issu du côté froid F qui s'est réchauffé dans la zone d'échange thermique froide Z_{F2} permet, dans le cas où ce fluide réinjecté présente une température un peu plus faible ou froide que celle du fluide primaire dans le côté chaud C, de réaliser à la fois un refroidissement de l'élément magnétocalorique M₂₂ par conduction / transfert thermique avec ce fluide réinjecté et un refroidissement par l'effet magnétocalorique dû à la démagnétisation. Cela peut être équivalent à un pré-refroidissement de l'élément magnétocalorique M₂₂. Cela peut ainsi avoir pour effet de décaler vers le bas le gradient thermique dans le circuit primaire P₃₀, entre le côté chaud C et le côté froid F, et donc d'augmenter la capacité de réfrigération du générateur thermique 30. Dans l'état de magnétisation illustré à la figure 3A, il n'y a pas de déplacement de fluide dans la seconde conduite de dérivation D₃. Chaque branche ou conduite de dérivation est indépendante et réglable séparément en terme de débit.

A l'inverse, dans la phase de magnétisation opposée illustrée à la figure 3B, il n'y a pas de déplacement de fluide primaire dans la première conduite de dérivation D₄ alors que le fluide primaire se déplace dans la seconde conduite de dérivation D₃ traversant la zone d'échange froide Z_{F3} pour être réinjecté par l'intermédiaire du point d'injection I₄ dans l'élément magnétocalorique M₂₁ de l'étage E₂ côté chaud C. L'échange thermique du côté chaud C est réalisé de manière conventionnelle. Les extrémités des deux éléments magnétocaloriques de l'étage E2 côté chaud C sont séparées par une zone d'échange thermique Z_{C4} destinée à évacuer la chaleur produite par le générateur thermique 30 ou à réchauffer une autre application extérieure, par exemple, au moyen d'un échange thermique avec un second circuit 7 de fluide secondaire.

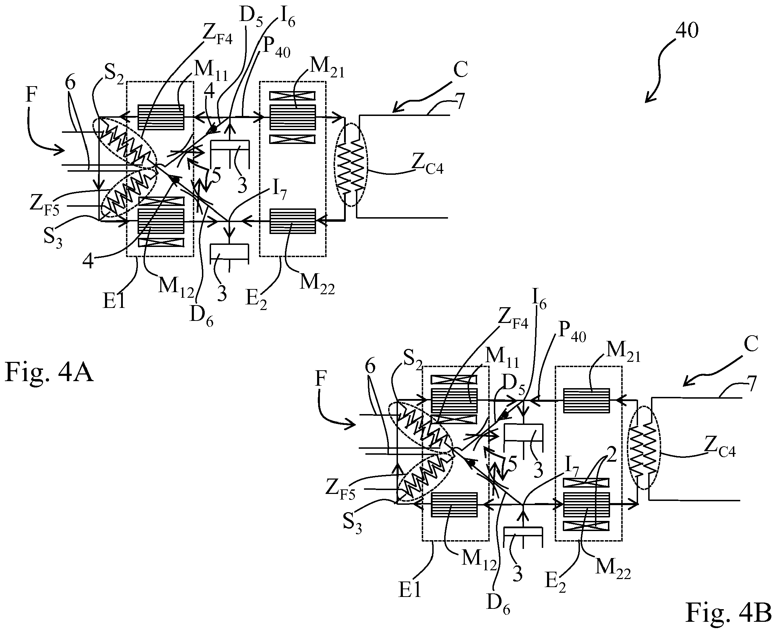

Les figures 4A et 4B représentent une variante de réalisation d'un générateur thermique magnétocalorique 40 se démarquant du générateur thermique 30 des figures précédentes par le fait que les points d'injection I₆ et I₇ des conduites de dérivation D₅ et D₆ sont situés entre les deux étages E₁, E₂. Cet agencement est particulièrement avantageux dans les cas où la température du fluide primaire réinjecté dans le circuit primaire P₄₀ correspond ou est susceptible de correspondre à celle du fluide primaire au point d'injection I₆, I₇ situé entre les deux étages E₁, E₂.

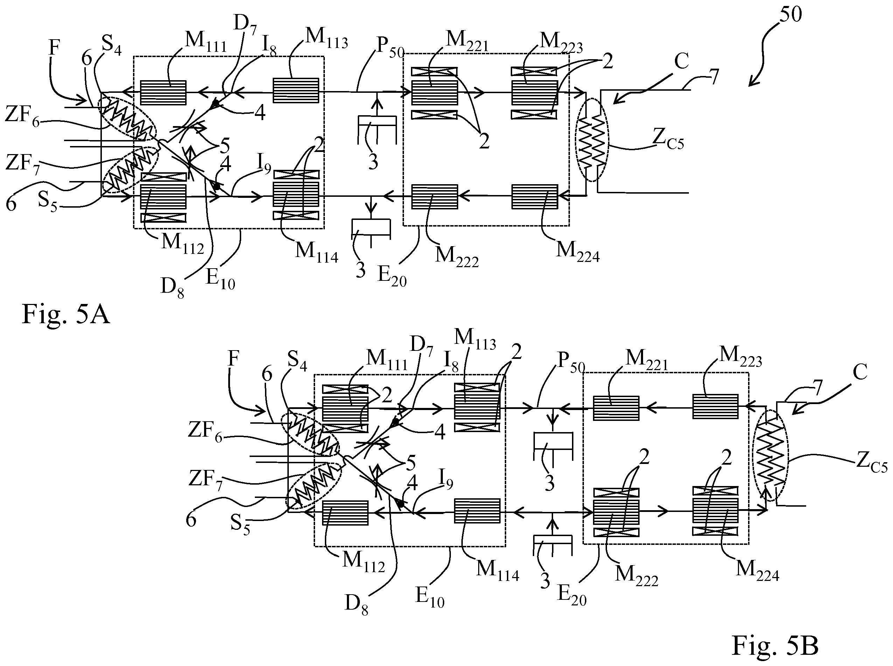

Les figures 5A et 5B représentent une variante de réalisation d'un générateur thermique magnétocalorique 50 se démarquant du générateur thermique 40 des figures 4A et 4B précédentes par le fait, d'une part, que les étages comportent plus d'éléments magnétocaloriques M₁₁₁, M₁₁₂, M₁₁₃, M₁₁₄, M₂₂₁, M₂₂₂, M₂₂₃, M₂₂₄ et, d'autre part, que les points d'injection I₈ et I₉ des conduites de dérivation D₇ et D₈ sont situés entre les éléments magnétocaloriques consécutifs M₁₁₁, M₁₁₃ et M₁₁₂, M₁₁₄ de l'étage E₁₀ situé côté froid F. Cet agencement est particulièrement avantageux dans les cas où la température du fluide primaire sortant d'une zone d'échange froide Z_{F6}, Z_{F7} est proche de la température du fluide primaire circulant entre les matériaux consécutifs M₁₁₁, M₁₁₃ et M₁₁₂, M₁₁₄ concernés. En effet, le fait de réinjecter dans le circuit primaire P₅₀ du fluide primaire qui a la même température que le fluide circulant dans le circuit primaire ne perturbe pas le gradient thermique établi dans le circuit primaire. Cela permet, d'exploiter la puissance thermique du générateur thermique 50 par l'intermédiaire des zones d'échange froides Z_{F6}, Z_{F7} sans avoir d'impact négatif sur son rendement.

En outre, le fait d'implanter plus d'éléments magnétocaloriques dans le générateur thermique 50 permet d'augmenter la puissance thermique et/ou le gradient thermique de ce dernier.

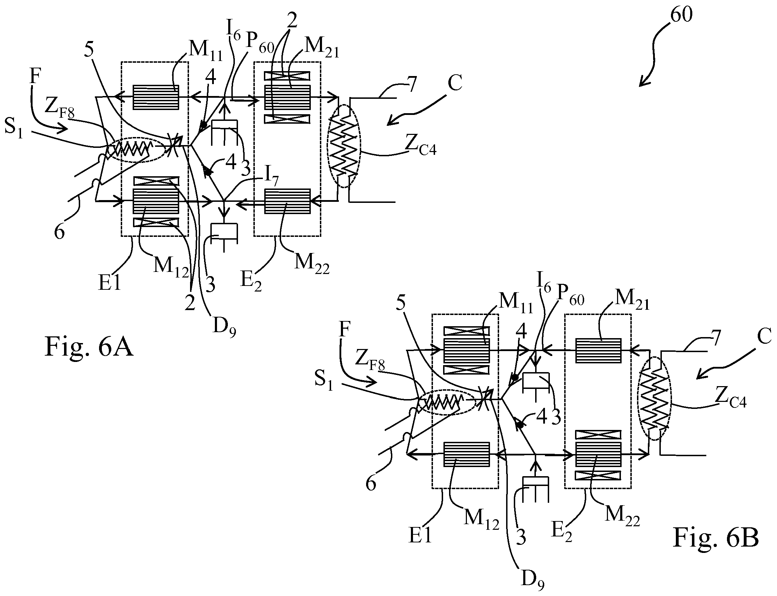

Le générateur thermique magnétocalorique 60 représenté dans les figures 6A et 6B est une variante de réalisation du générateur thermique 40 des figures 4A et 4B et s'en distingue par le fait qu'il comporte une seule conduite de dérivation D₉ avec une zone d'échange Z_{F8}, cette conduite se divisant en deux portions après la zone d'échange froide Z_{F8} pour réinjecter le fluide primaire aux points d'injection I₆ et I₇. Cette réinjection est la même que celle décrite en référence aux figures 4A et 4B. Elle présente l'avantage supplémentaire de réduire le volume du générateur thermique 60 en nécessitant moins de conduite pour la circulation du fluide primaire.

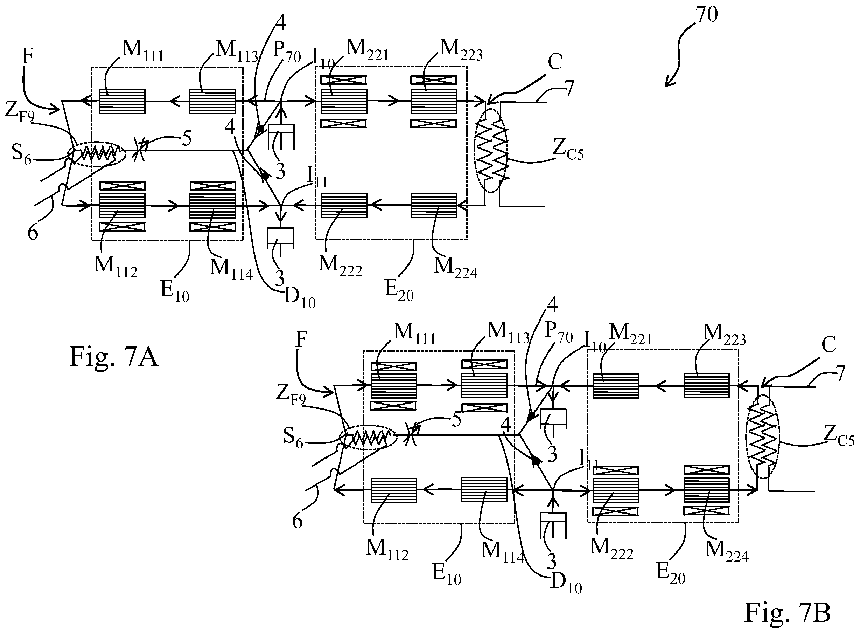

Le générateur thermique magnétocalorique 70 représenté dans les figures 7A, 7B et 9 est une variante de réalisation du générateur thermique 60 des figures 6A et 6B précédentes et s'en distingue par le fait que les étages E₁₀ et E₂₀ comportent plus d'éléments magnétocaloriques M₁₁₁, M₁₁₂, M₁₁₃, M₁₁₄, M₂₂₁, M₂₂₂, M₂₂₃, M₂₂₄, afin d'augmenter la puissance thermique et/ou le gradient thermique de ce dernier et donc d'augmenter sa capacité à refroidir le fluide secondaire d'un circuit secondaire par l'intermédiaire d'une zone d'échange froide Z_{F9}. Le circuit primaire P₇₀ comporte une seule conduite de dérivation D₁₀ avec une zone d'échange Z_{F9}, cette conduite se divisant en deux portions après la zone d'échange froide Z_{F9} pour réinjecter le fluide primaire aux points d'injection I₁₀ et I₁₁ entre les deux étages E₁₀, E₂₀. La figure 9 est une vue en perspective de ce générateur thermique 70 comportant trois circuits primaires, dans l'état de magnétisation représenté à la figure 7B. Tous les composants des trois circuits primaires ne sont pas visibles sur cette figure. Ont été identifiés notamment dans cette figure 9, les trois zones d'échange thermique froid Z_{F9}, Z'_{F9} et Z"_{F9} des trois circuits primaires du générateur thermique 70, ainsi qu'une zone d'échange thermique chaude Z'_{C5} d'un desdits circuits primaires. Le générateur thermique 70 comporte un arrangement magnétique avec trois rotors magnétiques R₁, R₂, R₃ qui, par leur rotation autour de l'axe longitudinal du générateur thermique 70, soumettent les éléments magnétocaloriques à une variation de champ magnétique. Les rotors magnétiques R₁, R₂, R₃ comportent chacun une armature sur laquelle sont montés des aimants permanents 2. Les éléments magnétocaloriques sont montés dans deux supports fixes S_{UP1}, S_{UP2}. Le fluide primaire est déplacé par des actionneurs réalisés par des pistons 3 actionnés par une came de commande C₇₀ dont le profil de came est réalisé, installé, usiné ou maté sur le rotor R₂.

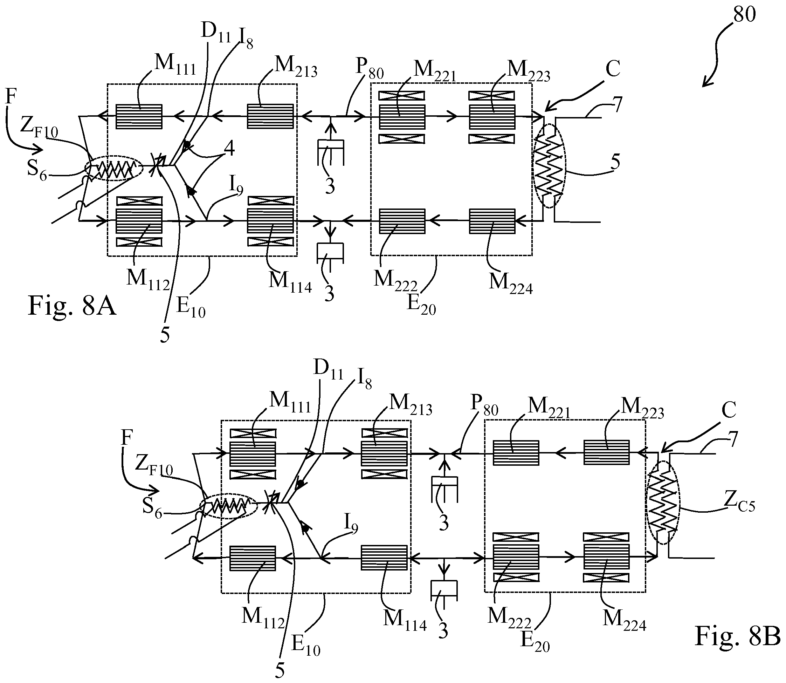

Le générateur thermique magnétocalorique 80 représenté dans les figures 8A et 8B est une variante de réalisation du générateur thermique 50 des figures 5A et 5B et s'en distingue par le fait qu'il comporte une seule conduite de dérivation D₁₁ avec une zone d'échange Z_{F10}, cette conduite se divisant en deux portions après la zone d'échange froide Z_{F10} pour réinjecter le fluide primaire aux points d'injection I₈ et I₉. Cette réinjection est la même que celle décrite en référence aux figures 5A et 5B. Elle présente l'avantage supplémentaire de réduire le volume du générateur thermique 80 en nécessitant moins de conduite pour la circulation du fluide primaire.

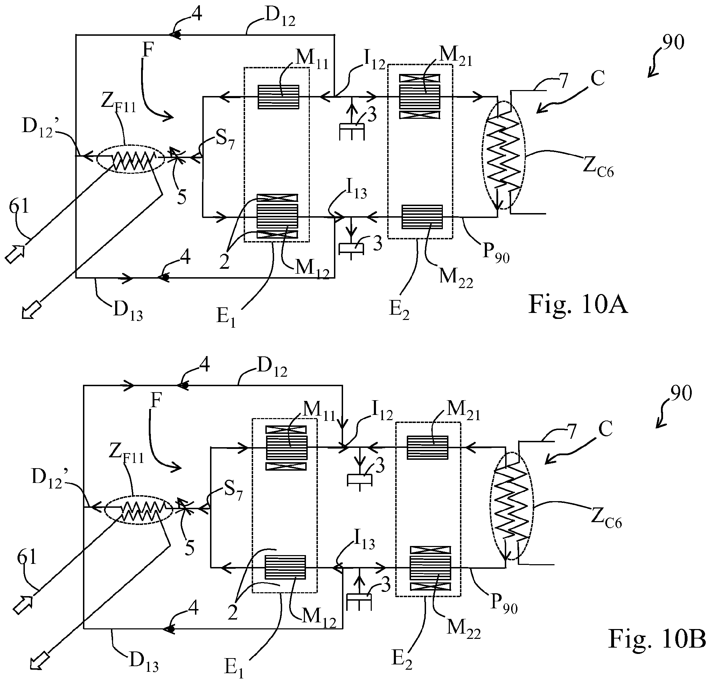

Le générateur thermique magnétocalorique 90 représenté dans les figures 10A et 10B comporte deux conduites de dérivation D₁₂ et D₁₃ présentant une portion commune de conduite de dérivation D₁₂'. Le générateur thermique 90 comporte deux étages E₁ et E₂ reliés par des moyens de déplacement du fluide primaire ou actionneurs 3. Un premier étage E₁ est positionné au niveau du côté froid F du générateur thermique 90 et l'autre étage E2 est positionné au niveau du côté chaud C.

La première conduite de dérivation D₁₂ relie le point de sortie S₇ à l'extrémité froide F du générateur thermique 90 au point d'injection I₁₂ situé dans le circuit primaire P₉₀, au niveau de l'extrémité chaude de l'étage E₁, entre l'actionneur 3 et l'extrémité chaude de l'élément magnétocalorique M₁₁. La deuxième conduite de dérivation D₁₃ relie le point de sortie S₇ à l'extrémité froide F du générateur thermique 90 à l'autre point du circuit primaire disposé du côté chaud du premier étage E₁, situé entre un actionneur 3 et l'extrémité chaude de l'élément magnétocalorique M₁₂. Les conduites de dérivation D₁₂ et D₁₃ comportent une portion de conduite D₁₂' commune dans laquelle est intégrée une zone d'échange froide Z_{F11} destinée à réaliser l'échange thermique entre le fluide primaire et un fluide secondaire du circuit secondaire 61. De plus, les conduites de dérivation D₁₂ et D₁₃ comportent chacune un dispositif contrôlant le sens de circulation du fluide primaire.

Ainsi, la portion commune de conduite de dérivation D₁₂' qui comporte un échangeur thermique apte à réaliser un échange thermique avec le fluide caloporteur secondaire du circuit secondaire 61 reçoit le fluide primaire sortant du côté froid des éléments magnétocaloriques M₁₁ et M₁₂ de l'étage E₁ situé du côté froid F lorsqu'ils sont en phase de démagnétisation. De cette manière, cette portion commune de conduite de dérivation D₁₂' est toujours traversée par le fluide primaire lorsqu'il a sa température la plus froide du cycle. Il en résulte que l'échange thermique dans la zone d'échange Z_{F11} est optimisé. En outre, le fluide primaire qui a subi une élévation de sa température due à l'échange thermique avec le circuit secondaire à refroidir, est ensuite réinjecté dans le circuit primaire, entre les étages thermiques E₁ et E₂, à un point I₁₂, I₁₃ du circuit primaire au niveau duquel la température n'est pas la plus faible. Il est notamment avantageux de régler le débit de fluide pouvant circuler vers les conduites de dérivation D₁₂ et D₁₃ afin de réguler la puissance thermique pouvant être échangée entre le circuit primaire et le circuit secondaire dans la zone d'échange Z_{F11}. Ainsi, plus le débit volumique de fluide primaire traversant cette zone d'échange Z_{F11} est important et plus l'échange sera important. De manière avantageuse, grâce au positionnement de la zone d'échange Z_{F11} dans une conduite de dérivation, l'élévation de la température du fluide primaire due à l'échange thermique dans la zone d'échange Z_{F11} a très peu, voire pas d'impact sur le fonctionnement du générateur thermique 90, en particulier sur sa capacité à maintenir un gradient thermique avec un fort rendement. Ceci est rendu possible par la réinjection du fluide primaire échauffé après un échange thermique dans une zone du circuit primaire P₉₀ dans laquelle la température de fluide primaire n'est pas la plus faible.

Le générateur thermique 90 représenté dans les figures 10A et 10B est particulièrement avantageux pour refroidir ou tempérer en continu un fluide secondaire circulant de manière continue dans le circuit secondaire, à travers la zone d'échange Z_{F11}. En effet, le positionnement de la zone d'échange thermique Z_{F11} intégrée en série dans les conduites de dérivation D₁₂, D₁₃ dans lesquelles le fluide primaire circule unidirectionnellement permet de réaliser un échange à flux croisé dans la zone d'échange thermique Z_{F11}, ce qui favorise l'échange thermique.

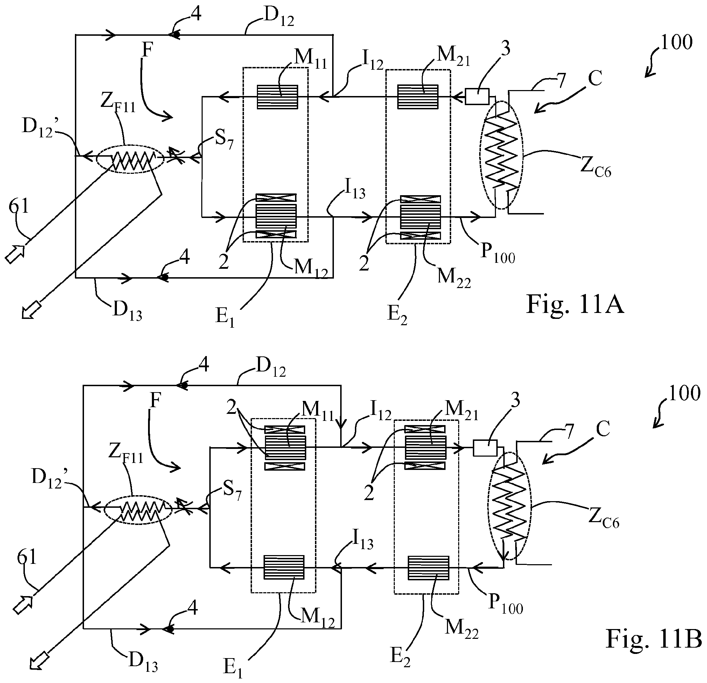

Le générateur thermique magnétocalorique 100 représenté dans les figures 11A et 11B présente les mêmes avantages que ceux décrits en regard du générateur thermique 90. Il s'en distingue par le déplacement du fluide primaire dans un circuit primaire P₁₀₀ et par les cycles magnétiques des éléments magnétocaloriques M₁₁, M₁₂, M₂₁ et M₂₂. En effet, dans le circuit primaire P₁₀₀ représenté, les éléments magnétocaloriques sont reliés en série et un moyen de déplacement du fluide primaire ou actionneur 3 assure le déplacement alternatif dans deux sens opposés du fluide primaire. Le fluide primaire traverse les éléments magnétocaloriques M₁₁, M₁₂, M₂₁ et M₂₂ en direction du côté froid F du générateur thermique 100 lorsqu'ils sont dans un état démagnétisé et il traverse les éléments magnétocaloriques M₁₁, M₁₂, M₂₁ et M₂₂ en direction du côté chaud C lorsqu'ils sont dans un état magnétisé. Les points d'injection I₁₂ et I₁₃ des conduites de dérivation sont positionnés entre des éléments magnétocaloriques M₁₁, M₂₁ et M₁₂, M₂₂ qui sont, dans cette variante, dans un même état de magnétisation.

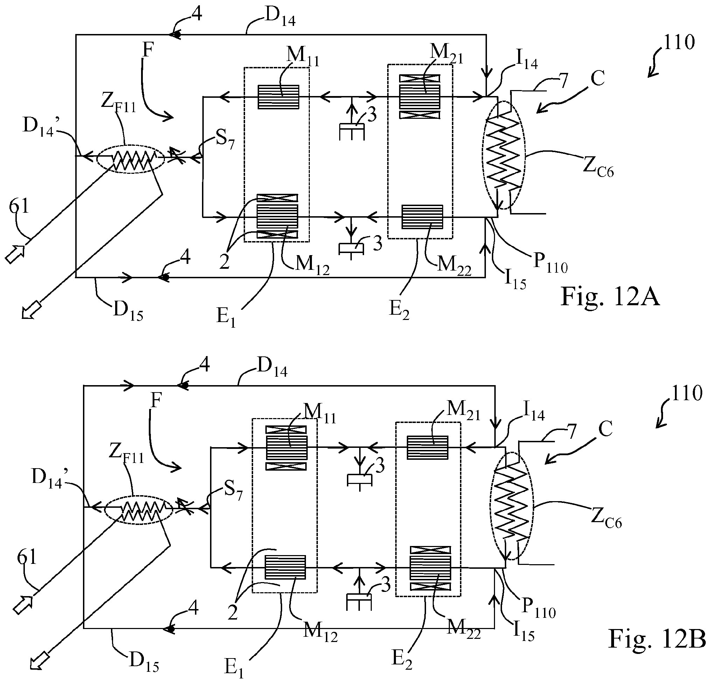

Le générateur thermique magnétocalorique 110 représenté dans les figures 12A et 12B présente les mêmes avantages que ceux décrits en regard du générateur thermique 90. Il s'en distingue par le positionnement des points d'injection I₁₄ et I₁₅ des conduites de dérivation D₁₄ et D₁₅. En effet, chaque point d'injection I₁₄ et I₁₅ est positionné entre un élément magnétocalorique M₂₁, M₂₂ de l'étage E₂ chaud et la zone d'échange chaude Z_{C6}. Chaque point d'injection I₁₄ et I₁₅ permet ainsi d'injecter du fluide primaire dont la température a été élevée dans la zone d'échange froide Z_{F11} dans le circuit primaire, en sortie d'un élément magnétocalorique M₂₁ ou M₂₂ duquel le fluide primaire ayant subi un échauffement sort et se dirige vers la zone d'échange chaude Z_{C6}. Ici à nouveau, l'impact de l'échange thermique sur la température du fluide primaire est réduite, ce qui permet de réaliser un échange thermique dans la zone d'échange froide Z_{F11} sans diminuer le rendement du générateur thermique 110.

Bien entendu, le générateur thermique magnétocalorique 10, 20, 30, 40, 50, 60, 70, 80, 90, 100, 110 selon l'invention peut comprendre plusieurs circuits primaires. En outre, ces circuits primaires peuvent comporter un nombre d'éléments magnétocaloriques différent de ce qui est représenté dans les figures annexées.

En outre, la forme des éléments magnétocaloriques M₁₁, M₁₂, M₂₁, M₂₂, M₁₁₁, M₁₁₂, M₁₁₃, M₁₁₄, M₂₂₁, M₂₂₂, M₂₂₃ et M₂₂₄ n'est pas limitée à une pièce rectangulaire. Une autre forme peut être envisagée. De plus, chaque élément magnétocalorique peut être constitué par plusieurs pièces accolées ou reliées entre elles fluidiquement en série.

### Possibilités d'application industrielle :

Il ressort clairement de cette description que l'invention permet d'atteindre les buts fixés, à savoir permettre de réaliser un échange thermique important soit au niveau du côté froid F soit au niveau du côté chaud C du générateur thermique magnétocalorique 10, 20, 30, 40, 50, 60, 70, 80, 90, 100, 110 sans perturber le fonctionnement de ce dernier et tout en optimisant son rendement.

Le générateur thermique ainsi que le procédé selon l'invention peuvent trouver une application dans tous les domaines thermiques, tel que par exemple le domaine du chauffage, de la climatisation, du tempérage du refroidissement ou autres, sans y être toutefois limité et ce, à des coûts compétitifs et avec un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique magnétocalorique (10, 20, 30, 40, 50, 60, 70, 80) comportant au moins un circuit primaire (P₁₀, P₂₀, P₃₀, P₄₀, P₅₀, P₆₀, P₇₀) reliant fluidiquement des éléments magnétocaloriques (M₁₁, M₁₂, M₂₁, M₂₂, M₁₁₁, M₁₁₂, M₁₁₃, M₁₁₄, M₂₂₁, M₂₂₂, M₂₂₃, M₂₂₄) par un fluide caloporteur appelé fluide primaire circulant selon un mouvement alternatif de va-et-vient, lesdits éléments magnétocaloriques (M₁₁, M₁₂, M₂₁, M₂₂, M₁₁₁, M₁₁₂, M₁₁₃, M₁₁₄, M₂₂₁, M₂₂₂, M₂₂₃, M₂₂₄) étant soumis au champ magnétique variable d'un système magnétique (2) créant alternativement, dans chaque élément magnétocalorique (M₁₁, M₁₂, M₂₁, M₂₂, M₁₁₁, M₁₁₂, M₁₁₃, M₁₁₄, M₂₂₁, M₂₂₂, M₂₂₃, M₂₂₄), une phase magnétique d'échauffement et une phase magnétique de refroidissement, générateur dans lequel le circuit primaire comporte un côté froid (F) et un côté chaud (C) au niveau desquels des éléments magnétocaloriques (M₁₁, M₁₂; M₁₁₁,M11₂ et M₂₁, M₂₂, M₂₂₃, M₂₂₄) sont reliés fluidiquement entre eux, générateur thermique **caractérisé en ce qu'**au moins un desdits côtés chaud (C) et froid (F) du circuit primaire comporte au moins un point de sortie (S₁, S₂, S₃, S₄, S₅, S₆) relié à un autre point du circuit primaire, appelé point d'injection (I₁, I₂, I₃, I₄, I₅, I₆, I₇, I₈, I₉, I₁₀, I₁₁) par l'intermédiaire d'au moins une conduite de dérivation (D₁, D₂, D₃, D₄, D₅, D₆, D₇, D₈, D₉, D₁₀, D₁₁) autorisant le déplacement de fluide primaire uniquement du point de sortie (S₁, S₂,S₃, S₄, S₅, S₆) vers le point d'injection (I₁, I₂, I₃, I₄, I₅, I₆, I₇, I₈, I₉, I₁₀, I₁₁).

2. Générateur thermique, selon la revendication 1, **caractérisé en ce que** les éléments magnétocaloriques (M₁₁, M₁₂, M₂₁, M₂₂, M₁₁₁, M₁₁₂, M₁₁₃, M₁₁₄, M₂₂₁, M₂₂₂, M₂₂₃, M₂₂₄) sont répartis dans au moins deux étages (E₁, E₂, E₁₀, E₂₀), et **en ce que** les éléments magnétocaloriques (M₁₁, M₁₂; M₁₁₁,M₁₁₂) d'un desdits étages (E₁, E₁₀) sont reliés fluidiquement entre eux au niveau du côté froid (F) et les éléments magnétocaloriques (M₂₁, M₂₂, M₂₂₃, M₂₂₄) d'un autre desdits étages (E₂, E₂₀) sont reliés fluidiquement entre eux au niveau du côté chaud (C).

3. Générateur thermique, selon l'une quelconque des revendications précédentes, **caractérisé en ce que** la conduite de dérivation (D₁, D₂, D₃, D₄, D₅, D₆, D₇, D₈, D₉, D₁₀, D₁₁) est reliée thermiquement à un circuit secondaire (6) par au moins une zone d'échange thermique (Z_{F1}, Z_{F2}, Z_{F3}, Z_{F4}, Z_{F5}, Z_{F6}, Z_{F7}, Z_{F8}, Z_{F9}, Z_{F10}, Z_{F11}).

4. Générateur thermique, selon la revendication 3, **caractérisé en ce que** la zone d'échange thermique (Z_{F1}, Z_{F2}, Z_{F3}, Z_{F4}, Z_{F5}, Z_{F6}, Z_{F7}, Z_{F8}, Z_{F9}, Z_{F10}, Z_{F11}) est agencée pour réaliser un déplacement à contre-courant entre le fluide primaire et un fluide secondaire dudit circuit secondaire (6).

5. Générateur thermique, selon la revendication 3, **caractérisé en ce que** la zone d'échange thermique (Z_{F1}, Z_{F2}, Z_{F3}, Z_{F4}, Z_{F5}, Z_{F6}, Z_{F7}, Z_{F8}, Z_{F9}, Z_{F10}) est agencée pour réaliser un déplacement à co-courant entre le fluide primaire et un fluide secondaire dudit circuit secondaire (6).

6. Générateur thermique, selon la revendication 3, **caractérisé en ce que** la zone d'échange thermique (Z_{F1}, Z_{F2}, Z_{F3}, Z_{F4}, Z_{F5}, Z_{F6}, Z_{F7}, Z_{F8}, Z_{F9}, Z_{F10}) est agencée pour réaliser un déplacement à courant croisé entre le fluide primaire et un fluide secondaire dudit circuit secondaire (6).

7. Générateur thermique, selon l'une quelconque des revendications précédentes, **caractérisé en ce que** la conduite de dérivation (D₁, D₂, D₃, D₄, D₅, D₆, D₇, D₈, D₉, D₁₀, D₁₁) comporte un dispositif de réglage (5) du débit de fluide primaire y circulant.

8. Générateur thermique, selon l'une quelconque des revendications précédentes, **caractérisé en ce que** ledit au moins un point de sortie (S₁, S₂, S₃, S₄, S₅, S₆) est situé dans le côté froid (F) du circuit primaire.

9. Générateur thermique, selon l'une quelconque des revendications 1 à 7, **caractérisé en ce que** ledit au moins un point de sortie est située dans le côté chaud (C) du circuit primaire.

10. Générateur thermique, selon la revendication 8 **caractérisé en ce que** le point d'injection (I₁, I₂, I₃, I₄, I₅) est situé dans le côté chaud (C) du circuit primaire.

11. Générateur thermique, selon la revendication 9, **caractérisé en ce que** le point d'injection est situé dans le côté froid (F) du circuit primaire.

12. Générateur thermique, selon l'une quelconque des revendications 1 à 9, **caractérisé en ce que** le point d'injection (I₆, I₇, I₁₀, I₁₁, I₁₂, I₁₃) est situé entre deux étages (E₁, E₂ ; E₁₀, E₂₀) d'éléments magnétocaloriques (M₁₁, M₁₂, M₂₁, M₂₂, M₁₁₁, M₁₁₂, M₁₁₃, M₁₁₄, M₂₂₁, M₂₂₂, M₂₂₃, M₂₂₄).

13. Générateur thermique, selon l'une quelconque des revendications 1 à 9, **caractérisé en ce que** le point d'injection (I₈, I₉) est situé entre des éléments magnétocaloriques (M₁₁₁, M₁₁₂, M₁₁₃, M₁₁₄, M₂₂₁, M₂₂₂, M₂₂₃, M₂₂₄) consécutifs de chaque étage (E₁₀, E₂₀).

14. Procédé de refroidissement d'un fluide dit fluide secondaire par un générateur thermique magnétocalorique selon l'une quelconque des revendications précédentes, **caractérisé en ce qu'**il consiste à relier thermiquement le circuit secondaire (6) dans lequel circule le fluide secondaire par au moins une zone d'échange thermique (Z_{F1}, Z_{F2}, Z_{F3}, Z_{F4}, Z_{F5}, Z_{F6}, Z_{F7}, Z_{F8}, Z_{F9}, Z_{F10}, Z_{F11}) à une conduite de dérivation (D₁, D₂, D₃, D₄, D₅, D₆, D₇, D₈, D₉, D₁₀, D₁₁) dudit générateur thermique magnétocalorique et à faire circuler en continu ledit fluide secondaire dans ledit circuit secondaire.

## Patentansprüche

1. Magnetokalorischer Wärmegenerator (10, 20, 30, 40, 50, 60, 70, 80) mit zumindest einem Primärkreislauf (P₁₀, P₂₀, P₃₀, P₄₀, P₅₀, P₆₀, P₇₀), der mit einem als Primärfluid bezeichneten Wärmeübertragungsfluid, das in einer abwechselnden Hin-und-Herbewegung zirkuliert, magnetokalorische Elemente (M₁₁, M₁₂, M₂₁, M₂₂, M₁₁₁, M₁₁₂, M₁₁₃, M₁₁₄, M₂₂₁, M₂₂₂, M₂₂₃, M₂₂₄) in Fluidverbidung setzt, wobei besagte magnetokalorische Elemente (M₁₁, M₁₂, M₂₁, M₂₂, M₁₁₁, M₁₁₂, M₁₁₃, M₁₁₄, M₂₂₁, M₂₂₂, M₂₂₃, M₂₂₄) dem variablen Magnetfeld eines magnetischen Systems (2) ausgesetzt sind, der abwechselnd in jedem magnetokalorischen Element (M₁₁, M₁₂, M₂₁, M₂₂, M₁₁₁, M₁₁₂, M₁₁₃, M₁₁₄, M₂₂₁, M₂₂₂, M₂₂₃, M₂₂₄), eine magnetische Erwärmungsphase und eine magnetische Abkühlungsphase erzeugt, Generator in dem der Primärkreislauf eine kalte Seite (F) und eine warme Seite (C) beträgt, an denen magnetokalorische Elemente (M₁₁, M₁₂; M₁₁₁,M₁₁₂ et M₂₁, M₂₂, M₂₂₃, M₂₂₄) miteinander in Fluidverbindung gesetzt sind, **dadurch gekennzeichnete**r Wärmegenerator, dass zumindest eine der besagten warmen (C) und kalten (F) Seite des Primärkreislaufs zumindest einen Auslasspukt (S₁, S₂, S₃, S₄, S₅, S₆) beträgt, der über zumindest eine Bypassleitung (D₁, D₂, D₃, D₄, D₅, D₆, D₇, D₈, D₉, D₁₀, D₁₁) mit einem anderen, als Injektionspunkt (I₁, I₂, I₃, I₄, I₅, I₆, I₇, I₈, I₉, I₁₀, I₁₁) bezeichneten Punkt des Primärkreislaufs verbunden ist, die den Fluss des Primärfluids ausschließlich vom Auslasspunkt (S₁, S₂,S₃, S₄, S₅, S₆) in Richtung des Injektionspunkts (I₁, I₂, I₃, I₄, I₅, I₆, I₇, I₈, I₉, I₁₀, I₁₁) erlaubt.

2. Wärmegenerator nach Anspruch 1, **dadurch gekennzeichnet, dass** die magnetokalorischen Elemente (M₁₁, M₁₂, M₂₁, M₂₂, M₁₁₁, M₁₁₂, M₁₁₃, M₁₁₄, M₂₂₁, M₂₂₂, M₂₂₃, M₂₂₄) in zumindest zwei Stufen (E₁, E₂, E₁₀, E₂₀) verteilt sind, und dadurch, dass die magnetokalorischen Elemente (M₁₁, M₁₂; M₁₁₁,M₁₁₂) einer der besagten Stufen (E₁, E₁₀) an der kalten Seite (F) in Fluidverbindung miteinander stehen, und dass die magnetokalorischen Elemente (M₂₁, M₂₂, M₂₂₃, M₂₂₄) einer anderen der besagten Stufen (E₂, E₂₀) an der warmen Seite (C) in Fluidverbindung miteinander stehen.

3. Wärmegenerator nach einem beliebigen der vorhergehenden Ansprüche, **dadurch gekennzeichnet, dass** die Bypassleitung (D₁, D₂, D₃, D₄, D₅, D₆, D₇, D₈, D₉, D₁₀, D₁₁) über zumindest eine Wärmeaustauschzone (Z_{F1}, Z_{F2}, Z_{F3}, Z_{F4}, Z_{F5}, Z_{F6}, Z_{F7}, Z_{F8}, Z_{F9}, Z_{F10}, Z_{F11}) thermisch mit einem Sekundärkreislauf (6) verbunden ist.

4. Wärmegenerator nach Anspruch 3, **dadurch gekennzeichnet, dass** die Wärmeaustauschzone (Z_{F1}, Z_{F2}, Z_{F3}, Z_{F4}, Z_{F5}, Z_{F6}, Z_{F7}, Z_{F8}, Z_{F9}, Z_{F10}, Z_{F11}) ausgelegt ist, damit das Primärfluid und ein Sekundärfluid von besagtem Sekundärkreislauf (6) gegenläufig zueinander fließen.

5. Wärmegenerator nach Anspruch 3, **dadurch gekennzeichnet, dass** die Wärmeaustauschzone (Z_{F1}, Z_{F2}, Z_{F3}, Z_{F4}, Z_{F5}, Z_{F6}, Z_{F7}, Z_{F8}, Z_{F9}, Z_{F10}) ausgelegt ist, damit das Primärfluid und ein Sekundärfluid von besagtem Sekundärkreislauf (6) gleichläufig zueinander fließen.

6. Wärmegenerator nach Anspruch 3, **dadurch gekennzeichnet, dass** die Wärmeaustauschzone (Z_{F1}, Z_{F2}, Z_{F3}, Z_{F4}, Z_{F5}, Z_{F6}, Z_{F7}, Z_{F8}, Z_{F9}, Z_{F10}) ausgelegt ist, damit das Primärfluid und ein Sekundärfluid von besagtem Sekundärkreislauf (6) im Kreuzstrom zueinander fließen.

7. Wärmegenerator nach einem beliebigen der vorhergehenden Ansprüche, **dadurch gekennzeichnet, dass** die Bypassleitung (D₁, D₂, D₃, D₄, D₅, D₆, D₇, D₈, D₉, D₁₀, D₁₁) eine Einstellvorrichtung (5) für den Durchfluss des darin fließenden Primärfluids beträgt.

8. Wärmegenerator nach einem beliebigen der vorhergehenden Ansprüche, **dadurch gekennzeichnet, dass** besagter zumindest ein Auslasspunkt (S₁, S₂,S₃, S₄, S₅, S₆) sich in der kalten Seite (F) des Primärkreislaufs befindet.

9. Wärmegenerator nach einem beliebigen der Ansprüche 1 bis 7, **dadurch gekennzeichnet, dass** besagter zumindest ein Auslasspunkt sich in der warmen Seite (C) des Primärkreislaufs befindet.

10. Wärmegenerator nach Anspruch 8, **dadurch gekennzeichnet, dass** der Injektionspunkt (I₁, I₂, I₃, I₄, I₅) sich in der warmen Seite (C) des Primärkreislaufs befindet.

11. Wärmegenerator nach Anspruch 9, **dadurch gekennzeichnet, dass** der Injektionspunkt sich in der kalten Seite (F) des Primärkreislaufs befindet.

12. Wärmegenerator nach einem beliebigen der Ansprüche 1 bis 9, **dadurch gekennzeichnet, dass** der Injektionspunkt (I₆, I₇, I₁₀, I₁₁, I₁₂, I₁₃) sich zwischen zwei Stufen (E₁, E₂ ; E₁₀, E₂₀) magnetokalorischer Elemente (M₁₁, M₁₂, M₂₁, M₂₂, M₁₁₁, M₁₁₂, M₁₁₃, M₁₁₄, M₂₂₁, M₂₂₂, M₂₂₃, M₂₂₄) befindet.

13. Wärmegenerator nach einem beliebigen der Ansprüche 1 bis 9, **dadurch gekennzeichnet, dass** der Injektionspunkt (I₈, I₉) sich zwischen aufeinander folgenden magnetokalorischer Elementen (M₁₁₁, M₁₁₂, M₁₁₃, M₁₁₄, M₂₂₁, M₂₂₂, M₂₂₃, M₂₂₄) jeder Stufe (E₁₀, E₂₀) befindet.

14. Verfahren zur Kühlung eines als Sekundärfluid bezeichneten Fluids durch einen magnetokalorischen Wärmegenerator nach einem beliebigen der vorhergehenden Ansprüche, **dadurch gekennzeichnet, dass** es darin besteht, den Sekundärkreislauf (6), in dem das Sekundärfluid zirkuliert, über zumindest eine Wärmeaustauschzone (Z_{F1}, Z_{F2}, Z_{F3}, Z_{F4}, Z_{F5}, Z_{F6}, Z_{F7}, Z_{F8}, Z_{F9}, Z_{F10}, Z_{F11}) thermisch mit einer Bypassleitung (D₁, D₂, D₃, D₄, D₅, D₆, D₇, D₈, D₉, D₁₀, D₁₁) von besagtem magnetokalorischen Wärmegenerator zu verbinden und besagtes Sekundärfluid kontinuierlich in besagtem Sekundärkreislauf zirkulieren zu lassen.

## Claims

1. Magnetocaloric thermal generator (10, 20, 30, 40, 50, 60, 70, 80) comprising at least one primary circuit (P₁₀, P₂₀, P₃₀, P₄₀, P₅₀, P₆₀, P₇₀) fluidically connecting magnetocaloric elements (M₁₁, M₁₂, M₂₁, M₂₂, M₁₁₁, M₁₁₂, M₁₁₃, M₁₁₄, M₂₂₁, M₂₂₂, M₂₂₃, M₂₂₄) by means of a heat transfer fluid called primary fluid flowing alternately back and forth, said magnetocaloric elements (M₁₁, M₁₂, M₂₁, M₂₂, M₁₁₁, M₁₁₂, M₁₁₃, M₁₁₄, M₂₂₁, M₂₂₂, M₂₂₃, M₂₂₄) being subjected to the variable magnetic field of a magnetic system (2) that creates alternately in each magnetocaloric element (M₁₁, M₁₂, M₂₁, M₂₂, M₁₁₁, M₁₁₂, M₁₁₃, M₁₁₄, M₂₂₁, M₂₂₂, M₂₂₃, M₂₂₄) a magnetic heating phase and a magnetic cooling phase, generator wherein the primary system comprises a cold side (F) and a hot side (C) at which magnetocaloric elements (M₁₁, M₁₂; M₁₁₁,M₁₁₂ et M₂₁, M₂₂, M₂₂₃, M₂₂₄) are fluidically connected with each other,
thermal generator **characterized in that** at least one of said hot (C) and cold (F) sides of the primary circuit comprises at least one outlet point (S₁, S₂, S₃, S₄, S₅, S₆) connected to another point of the primary circuit called injection point (I₁, I₂, I₃, I₄, I₅, I₆, I₇, I₈, I₉, I₁₀, I₁₁) by means of at least one bypass pipe (D₁, D₂, D₃, D₄, D₅, D₆, D₇, D₈, D₉, D₁₀, D₁₁) allowing the primary fluid to be displaced only from the outlet point (S₁, S₂,S₃, S₄, S₅, S₆) towards the injection point (I₁, I₂, I₃, I₄, I₅, I₆, I₇, I₈, I₉, I₁₀, I₁₁).

2. Thermal generator according to claim 1, **characterized in that** the magnetocaloric elements (M₁₁, M₁₂, M₂₁, M₂₂, M₁₁₁, M₁₁₂, M₁₁₃, M₁₁₄, M₂₂₁, M₂₂₂, M₂₂₃, M₂₂₄) are distributed in at least two stages (E₁, E₂, E₁₀, E₂₀), and **in that** the magnetocaloric elements (M₁₁, M₁₂; M₁₁₁,M₁₁₂) of one of said stages (E₁, E₁₀) are connected fluidically with each other on the cold side (F) and the magnetocaloric elements (M₂₁, M₂₂, M₂₂₃, M₂₂₄) of another of said stages (E₂, E₂₀) are connected fluidically with each other on the hot side (C).

3. Thermal generator according to any of the previous claims, **characterized in that** the bypass pipe (D₁, D₂, D₃, D₄, D₅, D₆, D₇, D₈, D₉, D₁₀, D₁₁) is thermally connected to a secondary circuit (6) by at least one heat exchange zone (Z_{F1}, Z_{F2}, Z_{F3}, Z_{F4}, Z_{F5}, Z_{F6}, Z_{F7}, Z_{F8}, Z_{F9}, Z_{F10}, Z_{F11}).

4. Thermal generator according to claim 3, **characterized in that** the heat exchange zone (Z_{F1}, Z_{F2}, Z_{F3}, Z_{F4}, Z_{F5}, Z_{F6}, Z_{F7}, Z_{F8}, Z_{F9}, Z_{F10}, Z_{F11}) is designed to achieve a countercurrent displacement between the primary fluid and a secondary fluid of said secondary circuit (6).

5. Thermal generator according to claim 3, **characterized in that** the heat exchange zone (Z_{F1}, Z_{F2}, Z_{F3}, Z_{F4}, Z_{F5}, Z_{F6}, Z_{F7}, Z_{F8}, Z_{F9}, Z_{F10}) is designed to achieve a co-current displacement between the primary fluid and a secondary fluid of said secondary circuit (6).

6. Thermal generator according to claim 3, **characterized in that** the heat exchange zone (Z_{F1}, Z_{F2}, Z_{F3}, Z_{F4}, Z_{F5}, Z_{F6}, Z_{F7}, Z_{F8}, Z_{F9}, Z_{F10}) is designed to achieve a cross-current displacement between the primary fluid and a secondary fluid of said secondary circuit (6).

7. Thermal generator according to any of the previous claims, **characterized in that** the bypass pipe (D₁, D₂, D₃, D₄, D₅, D₆, D₇, D₈, D₉, D₁₀, D₁₁) comprises a device (5) for adjusting the flow rate of the primary fluid that circulates in it.

8. Thermal generator according to any of the previous claims, **characterized in that** said at least one outlet point (S₁, S₂, S₃, S₄, S₅, S₆) is located in the cold side (F) of the primary circuit.

9. Thermal generator according to any of claims 1 to 7, **characterized in that** said at least one outlet point is located in the hot side (C) of the primary circuit.

10. Thermal generator according to claim 8, **characterized in that** the injection point (I₁, I₂, I₃, I₄, I₅) is located in the hot side (C) of the primary circuit.

11. Thermal generator according to claim 9, **characterized in that** the injection point is located in the cold side (F) of the primary circuit.

12. Thermal generator according to any of claims 1 to 9, **characterized in that** the injection point (I₆, I₇, I₁₀, I₁₁, I₁₂, I₁₃) is located between two stages (E₁, E₂ ; E₁₀, E₂₀) of magnetocaloric elements (M₁₁, M₁₂, M₂₁, M₂₂, M₁₁₁, M₁₁₂, M₁₁₃, M₁₁₄, M₂₂₁, M₂₂₂, M₂₂₃, M₂₂₄).

13. Thermal generator according to any of claims 1 to 9, **characterized in that** the injection point (I₈, I₉) is located between consecutive magnetocaloric elements (M₁₁₁, M₁₁₂, M₁₁₃, M₁₁₄, M₂₂₁, M₂₂₂, M₂₂₃, M₂₂₄) of each stage (E₁₀, E₂₀).

14. Method for cooling a fluid called secondary fluid by a magnetocaloric thermal generator according to any of the previous claims, **characterized in that** it consists in connecting thermally the secondary circuit (6) in which the secondary fluid circulates by means of at least one heat exchange zone (Z_{F1}, Z_{F2}, Z_{F3}, Z_{F4}, Z_{F5}, Z_{F6}, Z_{F7}, Z_{F8}, Z_{F9}, Z_{F10}, Z_{F11}) to a bypass pipe (D₁, D₂, D₃, D₄, D₅, D₆, D₇, D₈, D₉, D₁₀, D₁₁) of said magnetocaloric thermal generator and to have said secondary fluid circulating continuously in said secondary circuit.
